(19)

Europäisches
Patentamt
European
Patent Office
Office européen
des brevets

(11)  **EP 3 125 246 A2**

(12)  **EUROPEAN PATENT APPLICATION**

(43) Date of publication:
**01.02.2017 Bulletin 2017/05**

(51) Int Cl.:
**G11B 27/034** *(2006.01)*   **G11B 27/34** *(2006.01)*
**G11B 27/28** *(2006.01)*

(21) Application number: **16181320.9**

(22) Date of filing: **26.07.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **27.07.2015 EP 15306224**

(71) Applicant: **Thomson Licensing
92130 Issy-les-Moulineaux (FR)**

(72) Inventors:
• **HELLIER, Pierre
  35 576 Cesson Sévigné (FR)**
• **LEBRUN, Marc
  35 576 Cesson-Sévigné (FR)**
• **OISEL, Lionel
  35 576 Cesson-Sévigné (FR)**

(74) Representative: **Tarquis-Guillou, Anne
TECHNICOLOR
1-5, rue Jeanne d'Arc
92130 Issy-les-Moulineaux (FR)**

(54)  **METHOD FOR SELECTING SEQUENCES OF FRAMES AND CORRESPONDING ELECTRONIC DEVICE, COMPUTER READABLE PROGRAM PRODUCT AND COMPUTER READABLE STORAGE MEDIUM**

(57)    The disclosure relates to a method for selecting sequence of frames in a signal including a plurality of audio and/or video frames.

According to an embodiment, the selecting takes into account a value of a quantified indicator assigned to a frame of the audio and/or video signal and time slots of the sequences of frames in the audio and/or video signal.

The disclosure also relates to the corresponding electronic device, computer readable program product and computer readable storage medium.

Figure 1

## Description

### 1. Technical field

The present disclosure relates to the field of selecting frames of an audio and/or video signal, and notably to the field of automatic and, at least partially, on the fly selecting of frames of an audio and/or video signal, for instance an audio-visual file, like a personal video.

A method for selecting sequences of at least one audio and/or video signal and corresponding electronic device, computer readable program product and computer readable storage medium are described.

### 2. Background art

Electronic devices comprising audio and/or video capabilities are widely used today. Users of such electronic devices like sharing their audio and/or video files with other users, for example by email or by posting their audio-visual file on a social network. Such a sharing often involves sending the audio-visual file to another device (for instance a device of another user or a remote server).

However, an operation involving a storage, an editing and/or a transmission of an audiovisual file (like sharing a video) is often very greedy in terms of memory and bandwidth.

Some solutions of the prior art have proposed to build summary of a video by selecting frames according to their similarities, or lacks of similarity, with their preceding or their following frames, in order to obtain of set of samples representative of all shots of the video. However, such solution can sometimes lead to a resulting video of poor quality or that do not correspond to the wish of a user or to a requirement of a given video processing application. So, there's a need to provide a better solution for selecting part of a given video than the ones provided by prior art solutions.

### 3. Summary

The present principles enable at least one of the above disadvantages to be resolved by proposing a method, to be performed in at least on electronic device, for selecting at least one sequence of frames in at least an audio and/or video signal comprising a plurality of frames.

According to an embodiment of the present disclosure, said selecting takes into account a value of at least one quantified indicator assigned to a frame of said audio and/or video signal and a time slot representative of said at least one sequence of frames in said audio and/or video signal.

Indeed, it is sometimes required by a web application offering audio and/or video sharing capabilities that the audio and/or video file to be shared respects some determined constraint like a maximum duration.

A time slot (or time range or time code range) of a sequence of successive frames is herein defined as a time interval corresponding to the sequence in the input audio and/or video signal, delimited by the time code of the first frame of the sequence and the time code of the last frame of the sequence in the audio and/or video signal. It can be for instance represented by a duration, a percentage of a total duration, a time indicator, end or start pointers on a timeline or any other way to indicate a duration in an audio and/or video signal. It can be also represented by a number of frames as a number of frames is linked with a duration.

An aspect of the present disclosure concerns a method for selecting sequences in at least one signal comprising a plurality of audio and/or video frames, said selecting taking into account a value of at least one quantified indicator assigned to at least one of said frames and at least one time slot of one of said sequences, each sequence being selected according to a threshold value of said quantified indicator

According to an embodiment of the present disclosure, at least two threshold values related to said selected sequences are different.

According to an embodiment of the present disclosure, selecting sequences comprises:

- selecting at least one first sequence from said frames according to a threshold value, the time slot of the first sequence respecting a first duration constraint;
- varying said threshold value according to a second duration constraint; and
- selecting at least one second sequence from said frames, according to said varied threshold value, the time slot of the second sequence respecting said first duration constraint.

According to an embodiment of the present disclosure, selecting sequences comprises selecting at least one first sequence having a time slot respecting a first duration constraint, selecting said first sequence comprising:

- building a first set of sequences from said frames according to a first threshold value and to a second duration constraint;
- obtaining said first sequence, from a sequence of said first set having a time slot not respecting said first duration constraint, by removing or adding frames from said sequence of said first set.

According to an embodiment of the present disclosure, the method comprises selecting at least one second sequence having a time slot respecting said first duration constraint, selecting said second sequence comprising:

- varying said second duration constraint according to the timeslot of said first selected sequence;
- building a second set of sequences from said frames of said signal belonging to a time slot disjoint from the time slot of said sequence of said first set, according to a second threshold value and to said second duration constraint;

- obtaining said second sequence from a sequence of said second set having a time slot not respecting said first duration constraint, by removing or adding frames from said sequence of said second set.

According to an embodiment of the present disclosure, said selecting takes into account a time slot criterion relating to at least one element of a group comprising:

- a total duration of said at least one sequence of frames;
- a duration of one of said at least one sequence of frames;
- a temporal position of one of said at least one sequence of frames in said audio and/or video signal;
- a percentage of duration of said at least one sequence of frames regarding the total duration of the audio and/or video signal;
- a number of frames of said at least one sequence of frames.

For instance, such a criterion can be a total duration of the selected sequences being greater, equal, and/or shorter to a determined value, or a duration of one selected sequence being longer, equal, and/or shorter than a given value or a number of frames of the selected sequence being greater, equal, and/or shorter to a given number of frames.

According to an embodiment of the present disclosure, said selecting comprises:

- building said sequence of frames according to a threshold value related to said at least one quantified indicator;
- adapting said threshold value according to said time slot.

According to an embodiment of the present disclosure, said adapting comprises varying said threshold value by ordered steps.

According to an embodiment of the present disclosure, said adapting is performed until said time slot criterion is respected. For instance, said adapting is performed until a total duration of said sequences is greater than or equal to a given value.

According to an embodiment of the present disclosure, said selecting takes into account a time slot criterion relating to at least one element of a group comprising:

- a total duration of said built and/or selected sequences;
- a duration of one of said selected and/or built sequences;
- a temporal position of one of said selected and/or built sequences.

According to an embodiment of the present disclosure, said method comprises filtering at least one built and/or selected sequence by taking out at least one frame of said built and/or selected sequence to be filtered.

According to an embodiment of the present disclosure, said filtering takes into account a time slot representative of said filtered sequence. For instance, said filtering is performed until said total duration (including of course the duration of the time slot of the filtered sequence) is equal to a desired value or said filtered sequence has a duration equal a determined minimum value, or a number of frames of said filtered sequence is equal to a given number of frames.

According to an embodiment of the present disclosure, said filtering takes into account at least one value of said at least one quantified indicator assigned to at least one frame of at least one built and/or selected sequence.

According to an embodiment of the present disclosure, said method comprises removing at least one of said built sequences.

According to an embodiment of the present disclosure, said removing is performed according at least one element belonging to a group comprising:

- a duration of the time slot of said built sequence;
- a number of frames of said built sequence,
- a number of built sequences;
- an average of said values of said at least one quantified indicator assigned to the frames of a built sequence.

For instance, said removing can take into account a determined minimum and/or maximum duration of a built sequence, or a minimum or maximum number of frames of a built sequence.

According to an embodiment of the present disclosure, said method comprises obtaining at least one time slot constraint to be respected by said time slot. Such a time slot constraint can be for instance acquired from a user interface.

It can be a minimum or maximum duration of a selected sequence, or a desired value, a minimum and/or a maximum value of the total duration of all selected sequences.

According to an embodiment of the present disclosure, said adapting takes into account a number of selected sequences.

According to an embodiment of the present disclosure, said method comprises obtaining a desired number, and/or a minimum and/or maximum number of selected sequences.

According to an embodiment of the present disclosure, when several sequences of said audio and/or video signal are selected, said method further comprises concatenating said selected sequences.

According to an embodiment of the present disclosure, said method comprises creating an audio and/or video digest by concatenating said selected sequences.

According to an embodiment of the present disclosure, said method further comprises obtaining at least one kind of said quantified indicator to be assigned to a frame.

According to an embodiment of the present disclosure, said quantified indicator belongs to a group comprising:

- A blur indicator;
- A contrast indicator;
- an indicator related to a presence of faces in a frame;
- an indicator related to a color distribution in a frame;
- an indicator related to the presence of given events in a frame,
- an indicator related to the presence of advertisements in a frame,
- an indicator related to a level of noise in a frame;
- an indicator related to a presence of text in a frame;
- an audio indicator associated to a frame (like a level of audio energy or a detection of a particular audio event (laugh, applauses,...);
- a physical event indicator related to another signal synchronized with said audio and/or video signal.

For instance, the given events can be special actions in a sports game such as goal, match points, or any specific moments of the sports games. The presence of faces can also be more specific such as the presence of faces of specific persons (like actors or relatives) or animals.

A physical event indicator can result for instance of another device (like a remote control device, a tablet, a smart phone, a sensor, a connected watch), gathering items of information (like sweat, heart rate, temperature..) relating of a listener and/or a watcher of the audio and/or video signal during a previous rendering. Such an embodiment makes it possible for instance to select sequences of a video being the most funny, interesting, and/or frightening for the listener/ watcher of the previous rendering.

Of course, the group of quantified indicator can include other quantified indicators that will be obvious for a person skilled in the art after reading this disclosure. The at least one indicator that is used by the selecting method depends upon embodiment. Notably, some indicators will be better adapted to a real time, on the fly, assigning to a frame (for instance an assigning performed during an acquiring of the signal) than others indicators (which can be used when the assigning is performed with low time constraint, for instance on a stored audiovisual file).

According to an embodiment of the present disclosure, said selecting takes into account a resulting value, obtained by weighting all said at least one quantified indicator.

According to an embodiment of the present disclosure, said selecting further comprises assigning said value of said quantified indicator. Depending of embodiments, the assigning be can performed prior the selecting or during the selecting.

According to an embodiment of the present disclosure, said method comprises restituting at least one of said selected sequences.

According to an embodiment of the present disclosure, said method comprises restituting at least said concatenated sequences.

According to an embodiment of the present disclosure, said method comprises reproducing at least one of said selected sequences.

According to an embodiment of the present disclosure, said method comprises reproducing said concatenated sequences.

According to an embodiment of the present disclosure, said method comprises transmitting at least one of said selected sequences.

According to an embodiment of the present disclosure, said method comprises transmitting said concatenated sequences.

According to an embodiment of the present disclosure, said method comprises posting on a network at least one of said selected sequences.

According to an embodiment of the present disclosure, said method comprises posting on a social network said concatenated sequences.

According to an embodiment of the present disclosure, said method comprises sharing at least one of said selected sequences.

According to an embodiment of the present disclosure, said method comprises sharing said concatenated sequences.

According to an embodiment of the present disclosure, said method is performed, at least partially, on the fly on an electronic device, during the acquiring of an input audio and/or video signal or after the activating of a user command. Notably, in some embodiments, the assigning is performed during an acquiring or a reception of an audio and/or video signal and comprises a storing of the audio and/or video signal (in at least an audio/video file for instance) with corresponding assigned values, and the selecting is performed on the stored audio and/or video signal, after the activation of a user command.

According to an embodiment of the invention, said at least one quantified indicator is assigned to one frame or to a group of frames during an acquisition or a reception of the audio and/or video signal.

According to an embodiment of the invention, said method comprises selecting at least one kind of quantified indicators to be assigned to a frame and/or a group of frames.

According to an embodiment of the invention, said method comprises weighting said at least one quantified indicator.

According to an embodiment of the invention, said weighting comprises receiving a command for assigning a weight to said quantified indicator.

According to an embodiment of the invention, said method comprises displaying said time slot.

According to an embodiment of the invention, said method comprises adjusting said time slot upon reception of a command.

According to another aspect, the present disclosure relates to a method for creating an audio and/or video digest from an input audio and/or video signal comprising a plurality of frames, said method comprising:

- selecting at least one sequence of frames in said audio and/or video signal,
- creating said audio and/or video digest by concatenating said selected sequences.

According to an embodiment of the present disclosure, said selecting takes into account a value of at least one quantified indicator assigned to a frame of said audio and/or video signal and a time slot representative of said at least one sequence of frames in said audio and/or video signal.

While not explicitly described, the creating audio and/or video digest method of the present disclosure can comprise a selecting performed according to any of its embodiments of the selecting method of the present disclosure.

According to another aspect, the present disclosure relates to an electronic device comprising at least one memory and at least one processor configured for selecting at least one sequence of frames in at least one audio and/or video signal comprising a plurality of frames.

According to an embodiment of the present disclosure, said selecting takes into account a value of at least one quantified indicator assigned to a frame of said audio and/or video signal and a time slot representative of said at least one sequence of frames in said audio and/or video signal.

According to another aspect, the present disclosure relates to an electronic device comprising at least one memory and at least one processor configured for selecting sequences in at least one signal comprising a plurality of audio and/or video frames, said selecting taking into account a value of at least one quantified indicator assigned to at least one of said frames and at least one time slot of one of said sequences, each sequence being selected according to a threshold value of said quantified indicator,

According to an embodiment of the present disclosure, at least two threshold values related to said selected sequences are different.

According to an embodiment of the present disclosure, said electronic device comprises a display and said one or several processors are configured for collectively:

- displaying at least an icon representing at least of said selected sequences;
- receiving a selection of one of said icons;
- upon said receiving of said selection of one of said icons,
- displaying at least one quantified indicator associated to said sequence represented by said selected icon,
- displaying an item of information related to a time slot of said sequence represented by said selected icon.

According to another aspect, the present disclosure relates to an electronic device comprising at least one memory and at least one processor configured for selecting at least one sequence of frames in at least an audio and/or video signal comprising a plurality of frames.

According to another aspect, the invention concerns an electronic device comprising a display and one or several processors configured for collectively

- displaying at least an icon representing at least one sequence of at least one audio and/or video datum;
- receiving a selection of one of said icons;
- upon said receiving of said selection of one of said icons,

  ○ displaying at least one quantified indicator associated to said sequence represented by said selected icon,
  ○ displaying an item of information related to a time slot of said sequence represented by said selected icon.

According to an embodiment of the present disclosure, said one or several processors is configured for displaying a first given weight of said associated quantified indicator. Said first given weight can be used for determining said time slot of said sequence.

According to an embodiment of the present disclosure, said one or several processors is configured for:

- receiving a second given weight of said associated quantified indicator,
- modifying said displayed item of information related to said time slot according to said second given weight.

According to an embodiment of the present disclosure, said electronic device comprises a communication interface for receiving said at least one audio and/or video datum.

According to another aspect, the invention concerns an electronic device comprising a display and one or several processors configured for collectively displaying, for an audio and/or video data:

- graphical data representing the evolution of at least an quantified indicator for at least some of said audio and/or video data and
- on said graphical data representing the evolution of said quantified indicator for at least some of said audio and/or video data, at least one first given value of said at least one indicator,
- at least one item of information related to a time slot associated with said first given value of said quantified indicator.

According to an embodiment of the present disclosure, said one or several processors is configured for:

- receiving at least one second given value of said at least one indicator,
- modifying said displayed item of information related to said time slot according to said second given value.

According to an embodiment of the present disclosure, said one or several processors is configured for:

- displaying at least an icon representing at least one sequence of audio and/or video datum;
- receiving a selection of one of said icons;
- performing said displaying for said audio and/or video datum of said sequence represented by said selected icon.

According to an embodiment of the present disclosure, said one or several processors is configured for:

- displaying at least one quantified indicator associated to said sequence represented by said selected icon.

According to an embodiment of the present disclosure, said one or several processors is configured for a displaying a first given weight of said associated indicator. Said first given weight can be used for determining said time slot of said sequence.

According to an embodiment of the present disclosure, said one or several processors is configured for:

- receiving a second given weight of said associated quantified indicator,
- modifying said displayed item of information related to said time slot according to said second given weight.

According to an embodiment of the present disclosure, said electronic device comprises a communication interface for receiving said at least one audio and/or video datum.

According to another aspect, the invention concerns a server comprising an interface with a network and one or several processors configured for collectively:

- sending user interface data to be displayed on at least one terminal on said network comprising at least one icon representing at least one sequence of audio and/or video data to be displayed on said at least one terminal,
- receiving an indication that one of said icons is selected,
- sending at least one quantified indicator associated with the sequence represented by said selected icon l,
- send an item of information related to a time slot of the sequence represented by said selected icon.

According to an embodiment of the present disclosure, said one or several processors is configured for collectively sending an update of said item of information related to said time slot upon reception of an indication that one of said at least associated quantified indicator has been modified.

While not explicitly described, the electronic device and/or displaying device of the present disclosure can be adapted to perform the selecting method and/or the creating audio and/or video digest of the present disclosure in any of its embodiments.

While not explicitly described, the present embodiments related to a selecting method, to a creating audio and/or video digest method or to the corresponding electronic device can be employed in any combination or sub-combination. For example, some embodiments of the selecting method can involve a selecting taking into account a time slot criterion relating to a total duration of said at least one sequence of frames and to a duration of one of said at least one sequence of frames and comprising:

- building said sequence of frames according to a threshold value related to a blur indicator and to a contrast indicator;
- adapting said threshold value according to said time slot;

and can comprise restituting at least one of said selected sequences.

According to another aspect, the present disclosure relates to a non-transitory program storage device, readable by a computer.

According to an embodiment of the present disclosure, said non-transitory computer readable program product tangibly embodies a program of instructions executable by a computer to perform the selecting method and/or the creating audio and/or video digest of the present disclosure in any of its embodiments.

According to at least an embodiment of the present disclosure, said non-transitory computer readable program product comprises program code instructions for performing, when said non-transitory software program is executed by a computer, a method for selecting sequences in at least one signal comprising a plurality of audio and/or video frames, said selecting taking into account a value of at least one quantified indicator assigned to at least one of said frames and at least one time slot of one of said sequences, each sequence being selected according to a threshold value of said quantified indicator, at least two threshold values related to said selected sequences being different.

According to another aspect, the present disclosure relates to a computer readable storage medium carrying a software program comprising program code instructions for performing the selecting method and/or the creating audio and/or video digest of the present disclosure, in any of its embodiments, when said non transitory software program is executed by a computer.

According to at least an embodiment of the present disclosure, said computer readable storage medium carrying a software program comprises program code instructions for performing, when said non-transitory software program is executed by a computer, a method for selecting sequences in at least one signal comprising a plurality of audio and/or video frames, said selecting taking into account a value of at least one quantified indicator assigned to at least one of said frames and at least one time slot of one of said sequences, each sequence being selected according to a threshold value of said quantified indicator, at least two threshold values related to said selected sequences being different.

**4. List of drawings.**

The present disclosure will be better understood, and other specific features and advantages will emerge upon reading the following description, the description making reference to the annexed drawings wherein:

-   Figure 1 illustrates an audio and/or video signal comprising a plurality of frames from which at least one sequence is to be selected according to a particular embodiment of the selecting method of the present disclosure;
-   Figure 2 is a temporal representation of the value resulting from at least one quantified indicator value assigned to frames of the audio and/or video signal illustrated by figure 1;
-   Figure 3 illustrates an electronic device adapted to at least one particular embodiment of the present disclosure;
-   Figure 4 is a functional diagram that illustrates a particular embodiment of the selecting method of the present disclosure, compatible with the embodiment illustrated by figures 1 and 2.
-   Figure 5 is an example of a user interface of an electronic device compatible with the embodiment illustrated by figures 2 and 3.

It is to be noted that the drawings have only an illustration purpose and that the embodiments of the present disclosure are not limited to the illustrated embodiments.

**5. Detailed description of the embodiments.**

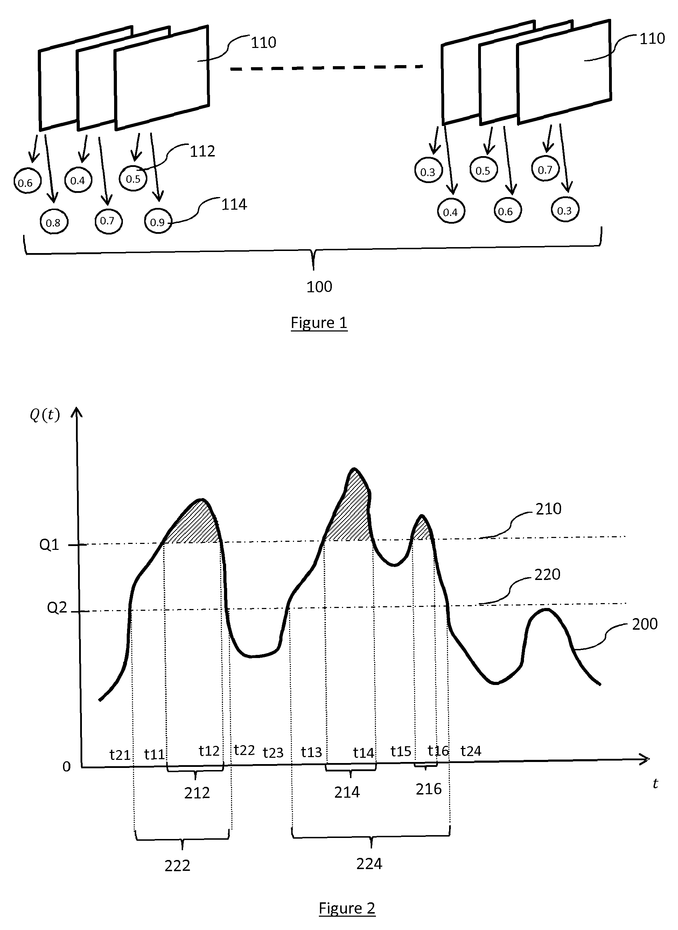

As illustrated by figure 1, at least an embodiment of the present disclosure proposes to obtain an output audio and/or video signal, from an audio and/or video signal 100 (called herein "input" audio and/or video signal) comprising a plurality of frames 110, the output signal having a shorter duration than the input signal. By "audio and/or video signal", it is to be understand a signal comprising audio/and video data. Such a signal can also comprise other data, for instance metadata, like metadata including a Uniform Resource Locator (URL), for instance an URL giving access to a specific internet site. The audio and/or video signal can be for instance a data stream or an audio-visual file.

The output audio and/or video signal is composed of at least one sequence of at least one input audio and/or video signal 100, the sequence being selected according both to a quantified indicator related to at least a frame included in the sequence (and representative for instance of its quality or its content or a quality or a content of another signal synchronized with said input signal) and to its time slot in the audio and/or video signal (for instance its length and/or its position)

In the illustrated embodiment, the sequences of the output audio and/or video signal are selected so that the output audio and/or video signal has a determined and/or a maximum duration. Such an embodiment can for instance help a user to fulfil the requirement of a given application of processing and/or sharing an audio and/or video file that he wants to use. Indeed, a requirement for using a given application for processing and/or sharing an audio and/or video file can be a determined duration of the audio and/or video file to be shared.

According to at least an embodiment, the at least one sequences of the output audio and/or video signal are selected according to at least one value 112, 114 of at least one quantified indicator (for instance a weighted value of two quantified indicators as illustrated by figure 1) assigned to at least some frames 110 of the input audio and/or video signal 100. In some embodiments, only some of the frames of the input audio and/or video signal can be assigned a quantified indicator value. Those frames can be obtained by sampling for instance. In some embodiments where several different types of signals are involved, the audio and/or video frames can be sampled, before the assigning of a quantified indicator, with a sampling rate compatible with the sampling rate of the other signals, for instance a sampling rate being the lowest sampling rates of all the involved signals.

In other embodiments, like in the embodiment illustrated by figure 1, all frames 110 of the audio and/or video signal are assigned a quantified indicator value. Depending upon embodiments, a frame can be assigned a single value or several values, relating to several quantified indicators, like a value 112 related to a global blur indicator and a value 114 related to a global contrast indicator, as illustrated by Figure 1.

The quantified indicators can differ upon embodiments. For instance, a blur indicator, a contrast indicator, and/or an indicator relating to a face detection or contours (like a number of faces present in a frame, eventually weighted by a detection confidence level and a relative size of a detected face compared to the size of a frame), and/or to detection of a particular content (animal detection, mountain, ...) based on semantic, can be used.

In some embodiment, for some indicators, a same value can be given to all frames of a group of frames. For instance, in an embodiment requiring a shot cutting of a video file, a same value of a given indicator (like an indicator relating to face detection) can be given to all frames of same shot. Of course, many content indicators, either related globally to a frame, to a group of frames, to the content of a frame or a group of frames, or to another signal synchronized with a frame or a group of frames, can be used, as it will be straightforward for the one skilled in the art after reading this present disclosure.

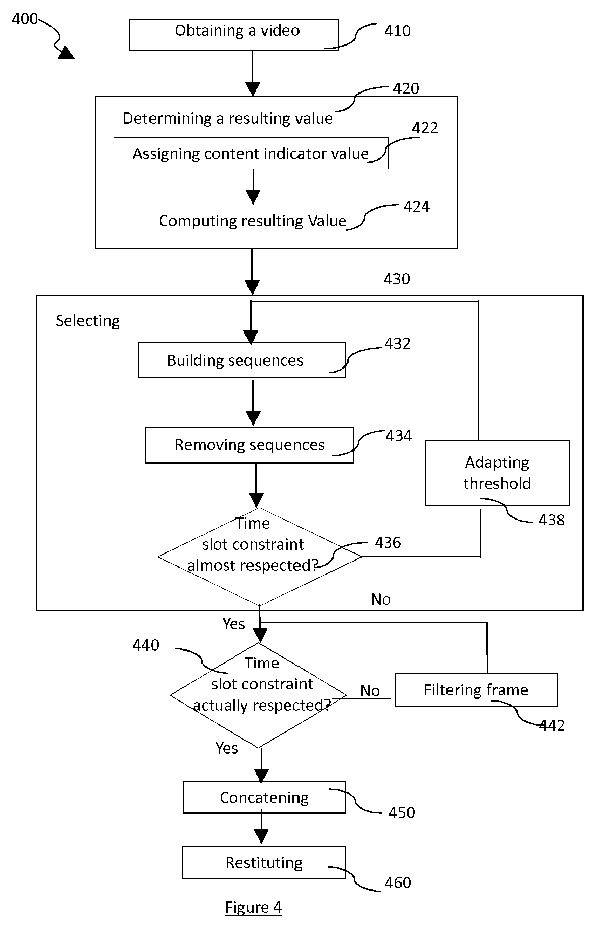

Figures 2 and 4 illustrate the selecting method 400 of the present disclosure. In the particular embodiment of figure 4, the method comprises obtaining 410 an input audio and/or video signal. In some embodiments, the obtaining 410 can comprise an acquiring of the audio and/or video signal. This acquiring is optional. Indeed, in other embodiments, eventually complementary, the obtaining 410 can comprise accessing an input audio and/or video file stored on a memory of the electronic device, for instance a non-volatile memory like a flash memory, and/or a hard disk, or a removable storage like a USB key of the electronic device. The input audio and/or video file can also be stored in a server, on the cloud.

In such an embodiment, the stored input audio and/or video signal can have previously been acquired by the electronic device that performs the selecting method of the present disclosure (for instance by a camera comprised in the electronic device) or can have been received by the electronic device that performs the selecting method on one communication interface of said device, from another electronic device, from the cloud, and/or from a server.

In the particular embodiment of figure 4, the method also comprises determining 420 at least one value related to at least one quantified indicator and already assigned to a frame of the acquired audio and/or video signal. Depending upon embodiments, such a value can be contained or associated, for instance as a metadata associated to the frame, in a received input audio and/or video signal that has been acquired by another device. In other embodiment, notably in an embodiment comprising an acquiring of the input audio and/or video signal, the determining 420 can comprise assigning 422 to a frame at least one value related to at least one quantified indicator. Such an assigning 422 can be performed either during and/or after an acquiring or on a stored audio and/or video signal. The way the assigning is performed can differ upon embodiments. An example of assigning a value of a global blur quantified indicator to frames is described in document "A consistent pixel-wise blur measure for partially blurred images. IEEE International Conference on Image Processing, 2014." published by X. Fang, F. Shen, Y. Guo, C. Jacquemin, J. Zhou, and S. Huang.

In some embodiments, a single value (eventually resulting from several quantified indicators) is assigned to a frame of the input audio and/or video signal. In other embodiments, a frame can be assigned a set of values representatives of several quantified indicators. When a single value is computed from different indicators, as illustrated by figures 1 and 4, the selecting method can comprises computing 424 a resulting value, deduced from at least some of the assigned quantified indicator values 112, 114. Notably, the quantified indicators which value is to be taken into account for computing the resulting value can be tailored dynamically (for instance thanks to a user interface).

Depending upon embodiments, different algorithms can be used for computing this resulting value. For instance, the resulting value can be a combination of assigned values of several quantified indicators (like a weighted linear combination of values of a blur indicator, a contrast indicator, an indicator of a presence of face, and/or a color distribution indicator). An exemplary temporal distribution 200 of the resulting values Q(t) of the frames of the input audio and/or video signal is illustrated by figure 2.

According to figure 4, the method 400 comprises selecting 430 at least one sequence of frames from the input audio and/or video signal. In the particular embodiment illustrated, the selecting 430 takes into account at least one computed resulting value assigned to a frame of the input audio and/or video signal. It also takes into account a least one time slot of at least one of the selected sequences. For instance, it can take into account a total duration of all the selected sequences (or in other words the sum of the time slots length of all selected sequences).

In particular embodiment illustrated, the selecting 430 comprises building 432 a sequence of frames according to a threshold related to the quantified indicator values. More precisely, in the embodiment illustrated by figure 2, a sequence can be defined as a part of the audio and/or video signal comprising frames that all have a computed resulting value fulfilling a given threshold. As exemplary illustrated by figure 2, when a built sequence should comprises frames all being assigned a resulting value higher than a threshold Q1 210, such a built sequence corresponds to one of the time slots (or time intervals) 212 [t11; t12], 214 [t13; t14] or 216 [t15; t16]. As illustrated by figure 2 in relation with the threshold Q2 220, the time intervals to be selected 222 [t21; t22], 224 [t23; t24] are different when the threshold varies. The variation of the threshold can alter the position, the size and/or the number of time slots that correspond to a built sequence.

In the illustrated embodiment, the selecting 430 is performed according to at least one time slot criterion, related to a time slot constraint, and comprises verifying 436 if the time slot constraint is respected by the sequences and adapting the threshold when the time slot constraint is not respected. For instance, the time slot constraint can relate to the total duration of all selected sequences. According to figure 4, the time slot constraint is for the total duration to be greater than or equal to a determined desired value.

When the time slot constraint is not respected (ie according to the illustrated embodiment when the total duration is lower than the desired value of the total duration), the selecting comprises adapting 438 the threshold according to that time slot criterion. The adapting can for instance be performed until the constraint is respected or at least almost respected.

Notably, in an embodiment where the resulting value is a numeric value belonging to a given numeric interval, the adapting 438 can comprise varying the threshold in an ordered manner (for instance, by decreasing and/or by increasing steps) until the time slot constraint is (at least almost) respected. In such an embodiment, the method can comprise initializing a threshold with a particular value, for instance the higher possible resulting value in an embodiment where the adapting comprises decreasingly varying the threshold. In other embodiment, the threshold can be initialized to the lower possible value of the resulting value, and the adapting can increasingly vary the threshold.

For instance, according to figures 2 and 4, the threshold is initialized to its highest possible value and is then decreased iteratively until the total duration of the sequences built according to the threshold is greater or equal than a desired value. Indeed, when the threshold decreases, the number of frames having a resulting value being higher than the threshold increases, and thus the total duration of selected sequence increases.

According to another embodiment, the threshold can be chosen in order to maximize the average of the resulting values of all selected sequences.

In some embodiments, as already pointed out, the selecting 430 can take into account a determined value of the total duration of all built sequences and/or the duration (or length) of a sequence (for instance a required value, a required minimum value or a required maximum value) and/or a number of selected sequences. Such a determined duration or number can either have a fixed value (stored in a memory zone of the electronic device for instance) or a dynamic value, for example a value acquired from a user of the electronic device or from an administrator through a user interface, or a value assigned automatically by a given application.

In the illustrated embodiment, the adapting 438 takes notably into account a total duration of all selected sequences, in order for instance for this total duration to be greater than a determined value, noted herein L, for instance a duration belonging to the interval [0; 50 seconds], like a duration of 5, 10, 15, 20, or 30 seconds.

Furthermore, according to the embodiment of figure 4, each selected sequence I has a duration $\#S_i$ higher than a determined minimum duration, noted herein $\sigma_{min}$, and/or lower than a determined maximal duration, noted herein $\sigma_{max}$. Indeed, an embodiment where each selected sequence has a minimum duration can help to avoid a visual stroboscopic (or flickering) effect.

Such a minimum duration can for instance be chosen in the interval [0; 5 seconds], like a minimum duration having a value of 2 seconds.

Such a maximum duration can for instance be chosen in the interval [2 ; 8 seconds], like a minimum duration having a value of 4 seconds. Indeed, a long sequence can be considered as annoying by a user used to frequent hopping between multimedia contents.

In some embodiments, the selecting can comprise removing 434 at least one built sequence. Indeed, in the exemplary embodiment of figure 4, where each built sequence must have a determined minimum duration, the selecting can comprise removing 434 at least one selected sequence having a duration lower than the determined minimum duration.

Such removing 434 can for instance be performed before verifying the at least one time slot criterion.

In such an embodiment, denoting by $Q(t)$, $t \in [t_0, t_N]$ the resulting value assigned to a frame 110 of the input audio and/or video signal V 100, the selecting 430 results in finding a number p of sequences $\{S_i\}_{i \in [1,p]}$ of V such that the following constraints are respected:

- $\forall\, i \in \{1, p\}\ \#S_i \geq \sigma_{min}$,
- $\forall\, i \in \{1, p\}\ \#S_i \leq \sigma_{max}$,
- $\sum_{i=1}^{p}(\#S_i) = L$
- $\{S_i\}_{i \in [1,p]} = \mathrm{argmax}_{S,p} \sum_{i=1}^{p} \int_{S_i} Q(t)\,dt$

(or in others terms the p sequences are selected in order to maximize the sum of the resulting value related to the quantified indicators assigned to all frames of all selected sequences).

In some embodiment, by varying the threshold, it will not always be possible to obtain sequences respecting a particular time slot criterion. For instance, in the particular embodiment of figure 4, it may be not possible to get sequences having a total duration being exactly a determined desired value. Thus, in such embodiments, the adapting can be performed until the time slot criterion is almost reached (but not exactly). Then, after the adapting, the method can comprise a filtering of the selected sequences in order for the selected sequences to exactly respect the time slot constraint. In such an embodiment, the method comprises verifying 440 if the time constraint is actually respected. For instance, in the illustrated embodiment, the time slot criterion relates to the total duration of the selected sequences, which is expected to be greater than a determined desired threshold. However, for some audio and/or video signals, by varying the threshold, it will not be possible to obtain sequences having a total duration being exactly a determined desired value. Thus, the adapting can be performed until the time slot criterion is almost reached. For instance, it can be performed until the total duration of the built sequences exceeds a determined total duration value. Then, a filtering 442 can be performed to order to "fine tune" the selected sequences. Such a filtering 442 can consist in taking out some frames of at least one selected sequence, until the total duration of the selected sequences reaches exactly the desired value.

The way a frame to be taken out is chosen depends upon embodiments. In some embodiment, a frame can be chosen according to a criterion of proximity between its resulting value and the current threshold value. Such an embodiment can permit for instance to eliminate the frames having the "lowest" quality or frames that contains no face.

In other embodiments, eventually complementary, where each selected sequence is assigned an average resulting value being the average of the resulting values computed from the values of indicators of all the frames belonging to this selected sequence, frames can be taken out from a selected sequence chosen according to a criterion of proximity between its average resulting value and the current threshold value. Such an embodiment can permit for instance to lower the size of the sequence having the "lowest" average quality.

In another embodiment, eventually complementary, frames can be chosen iteratively from different selected sequences (a first frame being chosen from a first sequence, a second frame from a second sequence, and so on...).

In still another embodiment, eventually complementary, frames can be chosen according to the time slot of the selected sequences they belong to. For instance they can be chosen from the longest or the shortest selected sequence, or according to the position, in the input audio and/or video signal, of the sequence they belong to (like being taken out from the selected sequence being the one closest to the beginning or the ending of the input audio and/or video signal).

In the illustrated embodiment, a frame being taken out can be a frame belonging to the longest selected sequence and having a resulting value being the closest to the current threshold value in this longest selected sequence. Of course, the filtering is optional. In other embodiments, the filtering can be replaced by an inserting, in a selected sequence of at least one specific frame, in order to increase its duration. For example, some frame of the sequence can be doubled.

In such an embodiment, the insertion can permit to increase the total duration of all the selected sequences, in order for instance to reach a determined desired duration.

In the embodiment of figure 4, the selecting method also comprise concatenating 450 the selecting and/or filtered sequences, in order to form an output audio and/or video signal, that can be stored or transmitted for instance or be an output of a given application. The selecting method can also comprise, as illustrated by figure 4, restituting 460 at least one element representative of the selecting and/or filtered sequences and/or the output audio and/or video signal. Such restituting can include displaying the selecting and/or filtered sequences, and/or displaying at least partially the output audio and/or video signal. In can also include rendering audio data associated with the frames contained in the displayed sequences or audio and/or video signal or metadata (like an URL) contained in or associated to with said audio and/or video signal.

In some embodiments, the selecting method can also comprise a reproducing of at least one selected sequence, or of the concatenated sequences. Such reproducing can comprise the generation of an audio and/or video file and the storing of that file on said electronic device, or on an external device, or the transmitting of said audio and/or video file.

In the illustrated embodiment, the adapting is performed until the time slot criterion is, at least almost, reached. In other embodiments, the adapting can be performed for all the possible values of the threshold. In such an embodiment, the selecting can comprise storing the built sequences for each threshold value, and selecting the built sequences better respecting the time slot constraint.

In some embodiments where a time slot criterion relates to a minimum and/or maximum duration of a sequence, in a variant, a sequence have a duration that respects this size constraint for a given threshold value but will not respect the size constraint after the varying of the threshold, the sequence can be kept unchanged once the threshold is modified. For instance, when a maximum duration is reached for a given threshold, the extra part of the sequence will be removed (and thus the corresponding frames will be ignored).

Such an embodiment can lead to selected sequences fulfilling different threshold values.

In an exemplary embodiment, where a time slot criterion relates to the total duration of the selected sequences, selecting a first sequence can comprise building a plurality of sequences according to this first time slot criterion, or to a time slot criterion derived from this first time slot criterion, Notably, the time slot criterion can be derived from the first time slot criterion and from the time slot(s) of already selected sequence(s). For instance, a total duration to be respected by the built sequences can be the maximum total duration of all selected sequences minus the total duration of the already selected sequences.

A set of sequences can be built according to a given threshold (for instance they can represent parts of signal associated to time slots associated with values of the quantified indicator being above the given threshold). Buildings can be performed iteratively, resulting each in a set of built sequences. The sets of sequences can differ upon iterations by varying the threshold value. Buildings can be performed, until the sum of all the time slots of a set of built sequences (called hereinafter last built sequences) respect the first time slot criterion (for instance be almost equal to a given, determined value).

When the time slot of at least one of the last built sequences does not respect a second duration constraint (for instance a maximum duration of a sequence), a sequence, respecting the second duration constraint, can be selected by modifying the sequence having the time slot not respecting the second duration constraint. The modifying can comprise for instance removing or adding at least one frame to the sequence as already explained herein. For instance, frames can be removed from a built sequence having a time slot greater than a maximum duration in order to obtain a sequence having a duration equal to the maximum duration. This obtained sequence is selected.

The selecting can thus be performed again, in order to select at least one second sequence, on parts of signal not included in time slots of the built sequence that has been modified to obtain the first selected sequence. For instance, if the time slots of the signal is the time interval [t1;tn] and a first sequence is selected by modifying a built sequence having a time slot [t2;t3] with t1 <t2<t3<tn, then the next selecting will be performed on the time intervals [t1;t2] U [t3;tn].

The selecting can be performed iteratively until the time slots of all the selected sequences respect the first and the second time slot criterion (for instance when each selected sequence has a time slot being under a maximum duration and the sum of the time slots of the already selected sequences is equal or almost equal to a maximum total duration).

In another exemplary embodiment, a first time slot criterion can relate to a minimum, a maximum and/or a determined duration of a sequence, and a second time slot criterion can relate to a determined total duration of all selected sequences.

The selection of sequences can comprise building (for instance by varying a threshold value) a set of sequences, so that a time slot of at least one of the built sequences respects the first time slot criterion (for instance being equal to a determined duration) and selecting at least one of the built sequences having a time slot respecting the first time slot criterion. For instance, all built sequences having a time slot respecting the first time slot criterion can be selected, or a only some of the built sequences having a time slot respecting the first time slot criterion can be selected, depending on their time slot position for instance. In some embodiment, a given number of built sequences having a time slot respecting the first time slot criterion can also be selected.

The selecting can be performed iteratively, as long as the time slots of the already selected sequences respect a second time slot criterion (for instance as long as the sum of the time slots of the already selected sequences is less than a maximum total duration).

In the illustrated embodiment, examples of minimum and/or maximum duration are often expressed in term of absolute duration (like 15 seconds for the total duration of an output audio and/or video signal). Of course, in other embodiments they can be expressed as relative durations, compared to the initial duration of the input audio and/or video signal. In such an embodiment, the total duration can be expressed for instance as a duration of 10% (Thus, it represents 15 seconds if the duration of the input audio and/or video signal is 150 seconds).

In the illustrated embodiment, the selected sequences are part of a single audio and/or video signal. Of course, in other embodiments, some selected sequences can belong to different audio and/or video signals. In such an embodiment, different thresholds can be applied to different audio and/or video signals.

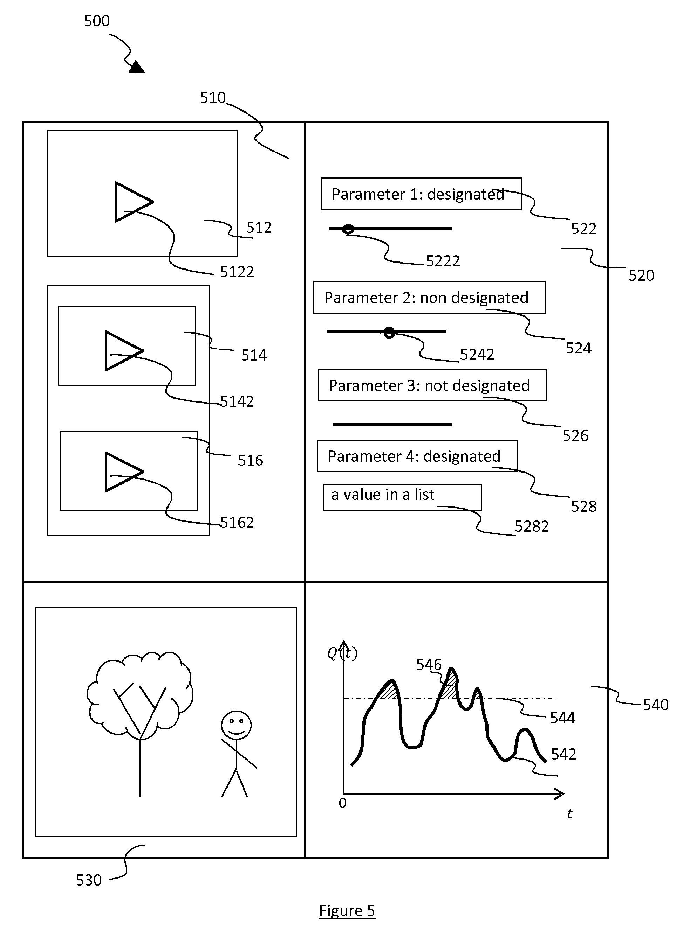

A user interface proposed to a user of a terminal implementing a particular embodiment, compatible with the embodiment of figures 2 and 4, of the selection method according to the present disclosure is described below in link with figure 5.

In the embodiment illustrated in figures 4 and 5, the method is performed on an input audio and/or video signal and comprises a restituting 460 of at least an element representative of the output audio and/or video signal.

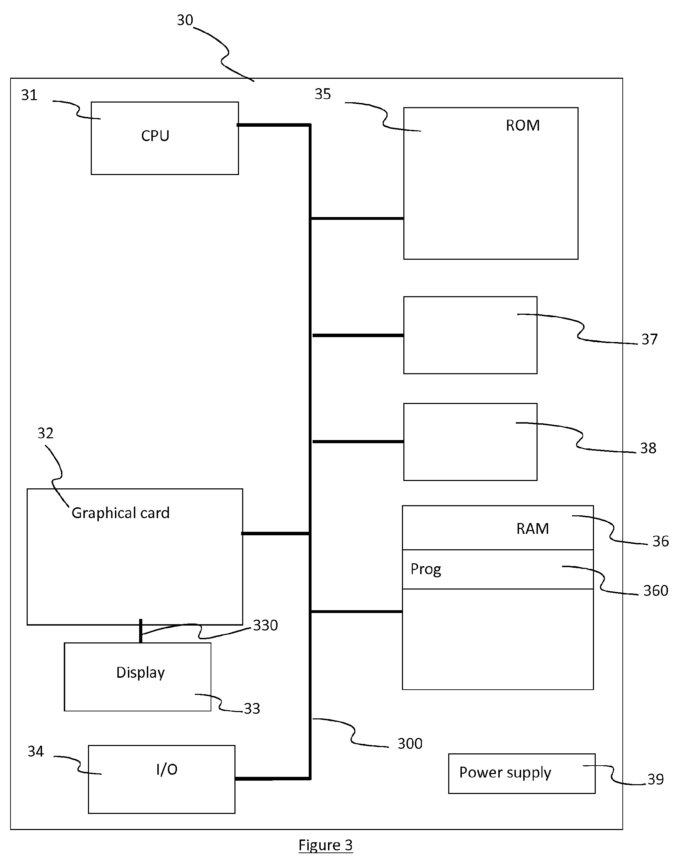

The restituting can for instance be performed on a sensitive touch screen of the terminal 30 of figure 3.

In the particular embodiment detailed, the screen can display a restituting zone 500 comprising several parts:

In a first zone 510, the images obtained from the output audio and/or video signal are displayed.

For instance, in some embodiment, a single image 512, obtained from at least one frame included in the output audio and/or video signal is displayed. In other embodiment, compatible to the above embodiment, a plurality of images 514, 516, each obtained from at least one frame belonging to a selected sequence concatenated in the output audio and/or video signal, is displayed.

The first zone can comprise a playing element 5122, 5142, 5162 associated with a displayed image 512, 514, 516. The activation of a playing element 5122 associated with an image 512 representative of the output audio and/or video signal can be detected, thanks to the sensitive touch screen for instance, and be considered as a command for playing the output audio and/or video signal (from its beginning or from the displayed image for instance).

The activation of a playing element 5142, 5162 associated with an image 514, 516 representative of a selected sequence can be performed similarly for commanding a playing of the selected sequence.

In some embodiments, the constraints to be respected by the time slots can be acquired dynamically. The selected sequences and the output audio and/or video signal can thus vary depending upon the constraints to be respected. The images displayed in the first zone 510 can also vary accordingly.

In a second zone 520, at least some parameters 522, 524, 526, 528 that can be taken into account by the selecting method are displayed. Such parameters can comprise at least one quantified indicator type (or kind), and/or at least one constraint about a time slot of at least one sequence, and/or a constraint about a number of sequences, or a threshold value related to at least one of quantified indicator and to be taken into account as explained above. If any, a current value 5222, 5242, 5282 of a parameter can also be displayed. Such parameters can be displayed for an informative purpose and for being eventually modified. In some embodiment, the second zone 520 can also comprise, in association with at least one displayed parameter, a designation element 522, 524, 526, 528 which activation indicates that the parameter should be used by the selected method and a command element 5224, 5242, 5282 which activation permits a user to modify the current value of a designated parameter. Some possible values of a parameter can also been displayed (for instance a higher or a lower possible value).

For instance, the command element can be a cursor 5222, 5242, movable along an element and whose position on the element indicates a desired value of the parameter. In another embodiment, the command element associated with a parameter can be a command button, a rolling list 5282 ...

The restituting of at least one selected sequence of the output audio and/or video signal commanded thanks to the command element displayed in the first zone 510 can be performed in a third zone 530 or in a specific window.

The restituting zone can also comprise a fourth zone 540 comprising graphical data such as the ones illustrated in figure 2 representing graphically the evolution 542 of a resulting value of the quantified indicator designated and the evolution 546 of the selected sequences, with a graphic indicator 544 of at least one given value (like a current threshold for at least one selected sequence or for the output audio and/or video signal), eventually activable. Notably, this given value can be a constant value for a given selected sequence.

Depending on the values of the graphic indicator 544, the graphical representation 544, 546 changes and therefore, in some embodiments, a graphic indicator value 542 can also be moved up or down in order to vary at least one of the selected sequences and to get a given total duration of the selected sequences.

Figure 3 describes the structure of an electronic device 30 adapted notably to perform the selection method of the present disclosure. The electronic device can be an audio and/or video signal acquiring device, like a smart phone or a camera. It can also be a device without any audio and/or video acquiring capabilities but with audio and/or video processing capabilities. In some embodiment, the electronic device can comprise a communication interface, like a receiving interface to receive an input audio and/or video signal to be processed according to the selecting method of the present disclosure, or a transmitting interface for transmitting an audio and/or video signal resulting from the selecting method of the present disclosure. This communication interface is optional. Indeed, in some embodiments, the electronic device acquires the input audio and/or video signal and restitutes the output audio and/or video signal on a user interface of the electronic device.

In the particular embodiment of figure 3, the electronic device 30 can include different devices, linked together via a data and address bus 300, which can also carry a timer signal. For instance, it can include a microprocessor 31 (or CPU), a graphics card 32 (depending on embodiments, such a card may be optional), at least one Input/ Output module 34, (like a keyboard, a mouse, a led, and so on), a ROM (or « Read Only Memory ») 35, a RAM (or « Random Access Memory ») 36. In the particular embodiment of figure 3, the electronic device can also comprise at least one communication interface 37 configured for the reception and/or transmission of data, notably audio and/or video, via a wireless connection (notably of type WIFI® or Bluetooth), at least one wired communication interface 38, a power supply 39. Those communication interfaces are optional.

In some embodiments, the electronic device 30 can also include, or be connected to, a display module 33, for instance a screen, directly connected to the graphics card 32 by a dedicated bus 330.

In the illustrated embodiment, the electronic device 30 can communicate with a server thanks to a wireless interface 37.

Each of the mentioned memories can include at least one register, that is to say a memory zone of low capacity (a few binary data) or high capacity (with a capability of storage of an entire audio and/or video file notably).

When the electronic device 30 is powered on, the microprocessor 31 loads the program instructions 360 in a register of the RAM 36, notably the program instruction needed for performing at least one embodiment of the selecting method described herein, and executes the program instructions.

According to a variant, the electronic device 30 includes several microprocessors. According to another variant, the power supply 39 is external to the electronic device 30.

In the particular embodiment illustrated in figure 3, the microprocessor 31 can be configured for selecting at least one sequence of frames in at least one audio and/or video signal comprising a plurality of frames, said said selecting takes into account a value of at least one quantified indicator assigned to a frame of the input audio and/or video signal and a time slot representative of the at least one sequence of frames in the input audio and/or video signal.

Notably, in some embodiments, the at least one processor can configured for selecting sequences in at least one signal comprising a plurality of audio and/or video frames, said selecting taking into account a value of at least one quantified indicator assigned to at least one of said frames and at least one time slot of one of said sequences, each sequence being selected according to a threshold value of said quantified indicator, at least two threshold values related to said selected sequences being different.

As will be appreciated by one skilled in the art, aspects of the present principles can be embodied as a system, method, or computer readable medium. Accordingly, aspects of the present disclosure can take the form of an hardware embodiment, a software embodiment (including firmware, resident software, micro-code, and so forth), or an embodiment combining software and hardware aspects that can all generally be referred to herein as a "circuit", module" or "system". Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage mediums to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it will be appreciated by those skilled in the art that the block diagrams presented herein represent conceptual views of illustrative system components and/or circuitry of some embodiments of the present principles. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

## Claims

1. A method for selecting sequences in at least one signal comprising a plurality of audio and/or video frames, said selecting taking into account a value of at least one quantified indicator assigned to at least one of said frames and at least one time slot of one of said sequences, each sequence being selected according to a threshold value of said quantified indicator, said method being **characterized in that** at least two threshold values related to said selected sequences are different.

2. The method of claim 1 **characterized in that** selecting sequences comprises:

   - selecting at least one first sequence from said frames according to a threshold value, the time slot of the first sequence respecting at least one first duration constraint;
   - varying said threshold value according to at least one second duration constraint; and
   - selecting at least one second sequence from said frames, according to said varied threshold value, the time slot of the second sequence respecting said first duration constraint.

3. The method of claim 1 **characterized in that** selecting sequences comprises selecting at least one first sequence having a time slot respecting at least one first duration constraint, selecting said first sequence comprising:

   - said first sequence, from a sequence of said first set having a time slot not building a first set of sequences from said frames according to a first threshold value and to at least one second duration constraint;
   - obtaining respecting said first duration constraint, by removing or adding frames from said sequence of said first set.

4. The method of claim 3 **characterized in that** it comprises selecting at least one second sequence having a time slot respecting said first duration constraint, selecting said second sequence comprising:

   - varying said second duration constraint according to the timeslot of said first selected sequence;
- building a second set of sequences from said frames of said signal belonging to a time slot disjoint from the time slot of said sequence of said first set, according to a second threshold value and to said second duration constraint;
- obtaining said second sequence from a sequence of said second set having a time slot not respecting said first duration constraint, by removing or adding frames from said sequence of said second set.

5. A method according to any of claim 1 to 4 **characterized in that** said selecting takes into account a time slot criterion relating to at least one element of a group comprising:

- a total duration of said selected sequences;
- a duration of one of said selected and/or built sequences;
- a temporal position of one of said selected and/or built sequences.

6. The method according to any of claims 1 to 5 **characterized in that** said method comprises filtering at least one built and/or selected sequence by taking out at least one frame of said built and/or selected sequence to be filtered.

7. The method according to claim 6 **characterized in that** said filtering takes into account a time slot of said filtered sequence.

8. The method according to any of claims 3 to 7 **characterized in that** said method comprises removing at least one of said built sequences.

9. An electronic device comprising at least one memory and at least one processor configured for selecting sequences in at least one signal comprising a plurality of audio and/or video frames, said selecting taking into account a value of at least one quantified indicator assigned to at least one of said frames and at least one time slot of one of said sequences, each sequence being selected according to a threshold value of said quantified indicator, said communication device being **characterized in that** at least two threshold values related to said selected sequences are different.

10. The electronic device of claim 9 **characterized in that** it comprises a display and **in that** said one or several processors are configured for collectively:

- displaying at least an icon representing at least of said selected sequences;
- receiving a selection of one of said icons;

- upon said receiving of said selection of one of said icons,
- displaying at least one quantified indicator associated to said sequence represented by said selected icon,
- displaying an item of information related to a time slot of said sequence represented by said selected icon.

11. The electronic device of claim 9 **characterized in that** selecting sequences comprises:

- selecting at least one first sequence from said frames according to a threshold value, the time slot of the first sequence respecting at least one first duration constraint;
- varying said threshold value according to at least one second duration constraint; and
- selecting at least one second sequence from said frames, according to said varied threshold value, the time slot of the second sequence respecting said first duration constraint.

12. The electronic device of claim 9 **characterized in that** selecting sequences comprises selecting at least one first sequence having a time slot respecting at least one first duration constraint, selecting said first sequence comprising:

- said first sequence, from a sequence of said first set having a time slot not building a first set of sequences from said frames according to a first threshold value and to at least one second duration constraint;
- obtaining respecting said first duration constraint, by removing or adding frames from said sequence of said first set.

13. The electronic device of claim 12 **characterized in that** said one or several processors are configured for collectively selecting at least one second sequence having a time slot respecting said first duration constraint, selecting said second sequence comprising:

- varying said second duration constraint according to the timeslot of said first selected sequence;
- building a second set of sequences from said frames of said signal belonging to a time slot disjoint from the time slot of said sequence of said first set, according to a second threshold value and to said second duration constraint;
- obtaining said second sequence from a sequence of said second set having a time slot not respecting said first duration constraint, by removing or adding frames from said sequence of said second set.

**14.** A non-transitory computer readable program product, **characterized in that** it comprises program code instructions for performing, when said non-transitory software program is executed by a computer, a method for selecting sequences in at least one signal comprising a plurality of audio and/or video frames, said selecting taking into account a value of at least one quantified indicator assigned to at least one of said frames and at least one time slot of one of said sequences, each sequence being selected according to a threshold value of said quantified indicator, at least two threshold values related to said selected sequences being different.

**15.** Computer readable storage medium carrying a software program **characterized in that** it comprises program code instructions for performing, when said non-transitory software program is executed by a computer, a method for selecting sequences in at least one signal comprising a plurality of audio and/or video frames, said selecting taking into account a value of at least one quantified indicator assigned to at least one of said frames and at least one time slot of one of said sequences, each sequence being selected according to a threshold value of said quantified indicator, at least two threshold values related to said selected sequences being different.

Figure 1

Figure 2

30

31 — CPU

35 — ROM

37

38

32 — Graphical card

330

Display

33

34 — I/O

300

RAM — 36

Prog — 360

Power supply — 39

Figure 3

Figure 4

500

510

512

5122

514

5142

516

5162

Parameter 1: designated

5222

522

520

Parameter 2: non designated

5242

524

Parameter 3: not designated

526

Parameter 4: designated

a value in a list

5282

528

$Q(t)$

546

544

542

540

0

$t$

530

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **X. FANG ; F. SHEN ; Y. GUO ; C. JACQUEMIN ; J. ZHOU ; S. HUANG.** A consistent pixel-wise blur measure for partially blurred images. *IEEE International Conference on Image Processing,* 2014